# EUROPÄISCHE PATENTSCHRIFT

(11) **EP 0 826 306 B1**
(45) Veröffentlichungstag und Bekanntmachung des Hinweises auf die Patenterteilung: **11.06.2003**
(21) Anmeldenummer: 96113869.0
(22) Anmeldetag: 29.08.1996
(51) Int. Cl.: A21D 13/00, A21D 13/08, A21D 15/00

(54) **Haltbares gefülltes Backwarenerzeugnis**
Preservable filled bakery product
Produit de boulangerie garni de bonne conservation

(43) Veröffentlichungstag der Anmeldung: 04.03.1998
(73) Patentinhaber: UNILEVER PLC, London EC4P 4BQ (GB); UNILEVER N.V., 3013 AL Rotterdam (NL)
(72) Erfinder: Horn, Hermann, 91522 Ansbach (DE); Gehr, Alfred, 91522 Ansbach (DE)
(74) Vertreter: Wurfbain, Gilles L.

(56) Entgegenhaltungen:
- EP-A- 0 162 644
- EP-A- 0 666 028
- EP-A- 0 681 785
- EP-A- 0 686 350
- DE-A- 4 020 008

## Beschreibung

Die Erfindung betrifft ein haltbares gefülltes Backwarenerzeugnis. Der Begriff "haltbar" bedeutet hier, daß das Erzeugnis bei Aufbewahrung unter Umgebungsbedingungen, d.h. ohne Kühlung, mindestens 3, vorzugsweise mindestens 4 und insbesondere mindestens 6 Monate oder noch länger in genußfähigem Zustand verbleibt.

Die EP-B-0 162 644 offenbart ein Snack-Nahrungsmittel-Produkt mit einem brotartigen Gehäuse und einer Füllkomponente, die vollständig durch das Gehäuse eingeschlossen ist. Die Füllmischung wird hierbei auf ein geformtes und erwärmtes Teigstück aufgebracht, das Teigstück verschlossen und mit dem erhaltenen geschlossenen Produkt ein Erwärmungsschritt ausgeführt. Der Erwärmungsschritt kann einen Backvorgang darstellen. Der Teig und die Füllmischung müssen so formuliert werden, daß das brotartige Gehäuse und die Füllkomponente jeweils bestimmte Wasseraktivitätswerte aufweisen. Das bekannte Erzeugnis weist den Nachteil auf, daß das fertig gefüllte und verschlossene Produkt einem Backschritt oder jedenfalls einem zweiten Erwärmungsschritt zur Pasteurisierung unterzogen werden muß. Dies schränkt die Freiheit bei der Formulierung der Füllungsmischung erheblich ein, da lediglich backstabile Bestandteile einbezogen werden können. "Backstabil" bedeutet, daß die Füllbestandteile beim Backen oder längeren Erhitzen keine oder allenfalls tolerierbare Beeinträchtigungen erfahren. Nicht backstabil sind z.B. geschäumte Füllungen, da sich die eingeschlossenen Gasblasen beim Erwärmen ausdehnen und die Schaumstruktur verlorengehen würde. Ebenfalls nicht backstabil sind emulsionsartige Füllungen, die beim Erwärmen eine Synärese erleiden würden. Nicht backstabil sind ferner Füllungen mit hohem Fettanteil, die beim Erwärmen zerlaufen würden, wobei das geschmolzene Fett in den Teigmantel eindringen würde. Des weiteren können auch stückige Füllkomponenten nicht backstabil sein, wenn deren Gelstruktur nicht ausreichend fest ist. So können z.B. Gemüsestückchen nach zu intensivem Erwärmen als zu weich und "matschig" empfunden werden.

Die bekannten Produkte weisen außerdem den folgenden Nachteil auf: Zwischen Teighülle und Füllung besteht ein mehr oder weniger großer Hohlraum infolge der Verdunstung von Wasseranteilen der Füllung und der natürlichen Ausdehnung während des Backvorgangs. Die so erhaltenen Produkte stellen wegen des sichtbaren Hohlraums optisch nicht zufrieden. Sie überzeugen darüber hinaus auch beim Verzehr nicht vollständig, weil infolge des Hohlraums der Eindruck eines inhomogenen Produkts entsteht, so daß die einzelnen Komponenten nicht als harmonisch aufeinander abgestimmte Einheiten empfunden werden.

Der vorliegenden Erfindung lag daher die Aufgabe zugrunde, ein haltbares gefülltes Backwarenerzeugnis bereitzustellen, das größere Freiheit bei der Formulierung der Füllungsmischung zeigt und ein weitgehend vollständig gefülltes Produkt ohne nennenswerten Hohlraum zwischen Teigmantel und Füllung darstellt.

Erfindungsgemäß wird diese Aufgabe durch ein haltbares gefülltes Backwarenerzeugnis gelöst, das (a) eine gebackene Teighülle mit einem Wasseraktivitätswert im Bereich von 0,60 bis 0,95, (b) eine Füllung, die nach dem Fertigbacken der Teighülle in pasteurisierter Form eingebracht worden ist, mit einem Wasseraktivitätswert von 0,20 bis 0,99 und einem pH-Wert von 3,5 bis 7 und (c) eine feuchtigkeitsdichte Verpackung, die das Backwarenerzeugnis vollständig umhüllt, aufweist, wobei im zwischen Backwarenerzeugnis und Verpackung verbleibenden Gasraum ein Sauerstoffgehalt von kleiner 1% herrscht und (d) die Keimzahl im Gesamtprodukt zum Zeitpunkt des Verpackens kleiner 150/g ist, mit der Maßgabe, daß nach Einbringen der Füllung gemäß Schritt (b) ein zweiter Erwärmungsschritt ausgeschlossen ist, und daß die gebackene Teighülle im Falle einer Käsehaltigen Füllung einen Wasseraktivitätswert aufweist, der im oben genannten Bereich, aber unterhalb oder oberhalb von 0,93 liegt.

Vorzugsweise ist das erfindungsgemäße Erzeugnis zum unmittelbaren Verzehr nach dem Auspacken geeignet und muß vorher keiner besonderen Behandlung, z.B. Erwärmen, unterzogen werden.

Die Erfindung beruht insbesondere auf der Erkenntnis, daß zur Herstellung eines haltbaren Erzeugnisses eine nachträgliche Füllung eines bereits fertiggebackenen Teigstücks möglich ist, wenn für die Teighülle, die Füllmischung und die Verpackung bestimmte Rahmenbedingungen beachtet werden und wenn die Füllung unter kontrollierten Bedingungen erfolgt, die eine Kontamination mit Mikroorganismen weitgehend verhindern.

Für die Haltbarkeit eines Erzeugnisses sind folgende Faktoren maßgeblich: (1) die sensorische Beschaffenheit, d.h. primär die Konsistenz des Erzeugnisses, darf sich über die Lagerdauer nicht nennenswert verschlechtern. Eine oft beobachtete Verschlechterung der Konsistenz besteht im sog. "Durchweichen" des Teigmantels; (2) das Erzeugnis darf keinen mikrobiologischen Verderb erleiden; (3) das Erzeugnis darf keinen abiotischen Verderb erleiden, d.h. eine Qualitätsverschlechterung ohne Beteiligung von Mikroorganismen. Ein derartiger abiotischer Verderb besteht z.B. im Ranzigwerden von Fettkomponenten. Das erfindungsgemäße Erzeugnis erfüllt alle diese Anforderungen.

Die Teighülle des erfindungsgemäßen Erzeugnisses ist vorzugsweise im wesentlichen brotartig und wird daher aus einem Hefeteig oder einem anderen Brotteig hergestellt. Die Zusammensetzung des Teiges, einschließlich wahlweisen Zusatzstoffen, die Verarbeitungsbedingungen und die Backbedingungen werden so gewählt, daß die gebackene Teighülle einen Wasseraktivitätswert im Bereich von 0,60 bis 0,95, insbesondere von 0,85 bis 0,95 und besonders bevorzugt von 0,88 bis 0,93 aufweist. Bevorzugte Teige enthalten Mehl, vorzugsweise Weizenmehl, bis zu 25 Gew.-% Fett, vorzugsweise Margarine, gegebenenfalls Gewürze, Salz sowie ein oder mehrere Backtriebmittel, wie insbesondere Hefe, entweder allein oder in Kombination mit anderen Backtriebmitteln.

Das erfindungsgemäße Erzeugnis umfaßt eine Füllung, die nach dem Fertigbacken der Teighülle in pasteurisierter Form eingebracht worden ist. Die Füllung kann aus einem extrem weiten Bereich von Komponenten ausgewählt, von beliebiger Zusammensetzung und entweder süß oder pikant im Geschmack sein, vorausgesetzt, daß sie pasteurisiert werden kann. Pasteurisieren bedeutet, daß die Füllung in ausreichender Weise erhitzt wurde, um vegetative Mikroorganismen zuverlässig abzutöten. Dabei können auch die einzelnen Komponenten der Füllung oder Gruppen von Komponenten getrennt pasteurisiert werden, vorausgesetzt, daß das Zusammenführen und Weiterbearbeiten der pasteurisierten Komponenten oder der Gruppen von Komponenten ohne erneute Kontamination mit Mikroorganismen geschieht, beispielsweise in einem geschlossenen System oder unter aseptischen Bedingungen. Vorzugsweise beinhaltet das Pasteurisieren das Erhitzen auf eine Temperatur von mindestens 70°C, insbesondere 75 bis 100°C und am meisten bevorzugt 80 bis 100°C. Optimale Pasteurisierzeiten und -temperaturen gestatten eine Ausgewogenheit zwischen Keimverminderung und thermischer Beeinträchtigung der Füllung. Die Füllung wird unter solchen Bedingungen erheblich weniger thermisch belastet, als wenn diese mit der Teighülle mitgebacken oder das Gesamtprodukt pasteurisiert wird.

Die Füllung kann nach dem Pasteurisieren unter aseptischen Bedingungen geschäumt bzw. aufgeschlagen werden. Sie kann auch hochscherenden Bedingungen unterworfen werden, um ihre Bestandteile zu homogenisieren oder zu dispergieren. Nach dem Pasteurisieren muß in jedem Fall eine Rekontamination mit Mikroorganismen weitgehend ausgeschlossen werden. Die Füllung des erfindungsgemäßen Erzeugnisses weist einen Wasseraktivitätswert im Bereich von 0,20 bis 0,99, insbesondere im Bereich von 0,80 bis 0,99 und besonders bevorzugt von 0,85 bis 0,95 auf. Sie weist ferner einen pH-Wert von 3,5 bis 7, insbesondere von 4,2 bis 5,5 auf. Allgemein gilt, daß höhere Wasseraktivitätswerte im angegebenen Rahmen insbesondere mit niedrigen pH-Werten kombiniert werden.

Die Füllung des erfindungsgemäßen Produkts muß nicht notwendigerweise backstabil sein, wodurch sich erheblich breitere Auswahl- und Kombinationsmöglichkeiten der Rohstoffe und Zutaten ergeben, als dies bei bekannten Erzeugnissen der Fall ist. So können beim erfindungsgemäßen Erzeugnis insbesondere geschäumte bzw. aufgeschlagene sowie emulsionsartige Füllungen zum Einsatz kommen. Z.B. können cremige Gemisch aus geeigneten Pflanzenfetten mit Zucker oder anderen Lebensmitteln, Schokolade und schokoladehaltigen Süßwaren und ähnliche Füllungen zum Einsatz kommen, da eine nachträgliche Hitzebelastung durch einen Backprozeß nicht mehr gegeben ist.

Die Erfindung zeigt auch bei an sich backstabilen Füllungen, wie z.B. Tomatenkonzentrat, Pilzen, Gemüsen, Schinken, Käse, Wurst, Nüssen, Früchten, Fleisch-, Fisch- oder Gemüsepasten, Vorteile, da die Füllung beim erfindungsgemäßen Erzeugnis einer geringeren thermischen Belastung ausgesetzt ist, so daß Konsistenz, Mundgefühl, Cremigkeit, Farbe, Zusammenhalt usw. weniger beeinträchtigt werden.

Damit das gebackene Teigstück gefüllt werden kann, muß ein geeigneter Hohlraum vorliegen. Dieser kann beispielsweise durch Kompression des lockeren Inneren des gebackenen Teigs, durch Aushöhlen etc. geschaffen werden. In einer bevorzugten Ausführungsform der Erfindung wird ein Hohlraum in der Teighülle dadurch erzeugt, daß vor dem Backen der Teighülle eine erste Füllung (Teilfüllung) eingebracht wird, so daß die erste Füllung vollständig von der Teighülle eingeschlossen ist. Beim Backvorgang bildet sich aufgrund der Verdunstung von Wasseranteilen der ersten Füllung und der Volumenausdehnung des Teiges ein Hohlraum, der nach Abschluß des Backvorgangs gefüllt werden kann. Geeignet sind je nach gewünschtem Gesamterzeugnis zum Beispiel eine Scheibe Wurst, z.B. Salami oder Käse, eine dünne Schicht Fisch-, Leber- oder Gemüsepastete, aber auch alle übrigen zum jeweiligen Gesamterzeugnis passenden Lebensmittel, auch süße und fett- oder fruchthaltige Erzeugnisse. Die genannte Teilfüllungen, z.B. Salami oder Käse, können im allgemeinen durch folgende Parameter weiter definiert werden: Wassergehalt: 20 bis 30 Gew.-% und/oder Fettgehalt 40 bis 50 Gew.-% (Angaben vor dem Backen). Vorzugsweise ist die Teilfüllung so gewählt, daß sie nach dem Backen einen Wasseraktivitätswert im Bereich von 0,20 bis 0,99, insbesondere im Bereich von 0,80 bis 0,99, und einen pH-Wert von 3,5 bis 7, insbesondere von 4,2 bis 5,5, aufweist. Es ist außerdem bevorzugt, daß die Wasseraktivitäts- und pH-Werte der ersten Füllung (nach dem Backen) und der nach dem Backen eingebrachten Füllung weitgehend gleich sind.

Die Teighülle, gegebenenfalls mit Teilfüllung, wird bei 180 bis 250°C, insbesondere 200 bis 230°C, über eine Zeit von 10 bis 15 min, insbesondere 12 bis 14 min, gebacken. Die genauen Backzeiten und -temperaturen richten sich nach der Größe, Dicke, etc. des Teigstücks. Die Backzeiten und -temperaturen reichen im allgemeinen aus, die Hefeorganismen vollständig abzutöten.

Die Befüllung erfolgt durch geeignete, möglichst geschlossene Apparate, die so konstruiert sind, daß sie in ihren produktführenden Teilen keine Rückstände über längere Zeit zurückhalten und dadurch zum Keimanstieg beitragen. Sie müssen in allen produktführenden Teilen leicht zu demontieren, zu reinigen und zu desinfizieren sein. Besonders bevorzugt sind solche, die nach Gebrauch in einem geschlossenen Kreislauf gereinigt und desinfiziert werden können. Im allgemeinen muß zur Befüllung in dem gebackenen Teigstück eine geeignete Füllungsöffnung angebracht werden. Hierzu können die gebackenen Teigstücke zunächst in Reihen ausgerichtet und in eine Haltevorrichtung eingeschoben werden. Danach wird durch Absenken eines drehenden, scharfen Mundstücks eine Öffnung der gewünschten Größe erzeugt. Die Vorrichtung ist so konstruiert, daß es zu keiner Rekontamination der gebackenen Erzeugnisse kommt.

Nach dem Füllen wird das erfindungsgemäße Erzeugnis feuchtigkeitsdicht verpackt. Hierzu sind insbesondere Folienbeutel geeignet, die gasdicht verschweißt bzw. versiegelt werden können. Geeignete Folien bestehen z.B. aus ausreichend sauerstoffdichten Kunststoffverbunden oder Verbunden von Kunststoff- mit Aluminiumfolie. Besonders bevorzugt sind transparente oder nicht-transparente hochgasdichte Verbundfolien aus Zellglas, PETP oder OPP (biaxial gerecktes PP) mit Aluminium und einer siegelfähigen Innenschicht aus beispielsweise PE, oder mit EVOH (Poly(Ethylen-co-Vinylalkohol)) ko-extrudierte PA- oder PE-Folien als Träger- bzw. Siegelschicht. Bevorzugte Materialien weisen eine Sauerstoffdurchlässigkeit von weniger als 10 cm³/m² x d x bar und eine Wasserdampfdurchlässigkeit von weniger als 10 g/m² x d auf.

Im zwischen Backwarenerzeugnis und Verpackung verbleibenden Gasraum herrscht ein Sauerstoffgehalt von kleiner 1%, insbesondere von kleiner 0,6%. Hierzu kann vorzugsweise beim Verpackungsschritt ein Gasspülschritt vorgesehen werden, um eine Atmosphäre aus einem geeigneten Gas oder einer Gasmischung zu schaffen, in der das Backwarenerzeugnis vorliegt. Geeignete Gase sind Stickstoff oder Kohlendioxid oder Gemische aus beiden.

Vor dem Verpacken kann eine Oberflächenpasteurisation vorgesehen werden, bei der das gefüllte Erzeugnis beispielsweise infraroter Strahlung ausgesetzt wird. Diese Behandlung dient dazu, Mikroorganismen, die sich aus der Umgebungsatmosphäre auf der Oberfläche des Erzeugnisses abgesetzt haben, abzutöten.

Die Keimzahl im Gesamtprodukt ist zum Zeitpunkt des Verpackens kleiner 150/g, insbesondere kleiner 100/g. Sie wird bestimmt durch Aufbringen einer homogenisierten Probe, die repräsentativ für das Gesamtprodukt ist, auf sogenannte Plate-Count-Agar, Bebrüten unter aeroben Bedingungen über 3 Tage bei 30°C und anschließendes Auszählen. Um diese niedrige Keimzahl zu erreichen, werden bei der Herstellung des erfindungsgemäßen Erzeugnisses besondere Hygienebedingungen beachtet. So werden ausgesuchte keimarme Ausgangsstoffe für sämtliche Verfahrensschritte bevorzugt. Ferner ist dafür zu sorgen, daß es nach dem Backen der Teighülle, gegebenenfalls mit vor dem Backen eingebrachter Füllung, zu keiner nennenswerten Rekontamination mit Mikroorganismen kommt. Gleichfalls wird darauf geachtet, daß nach dem Pasteurisieren der Füllung diese keiner nennenswerten Rekontamination ausgesetzt ist. Die Füllung wird nach dem Pasteurisieren vorzugsweise in geschlossenen Apparaturen unter aseptischen Bedingungen gehandhabt.

Das erfindungsgemäße Erzeugnis kann Konservierungsmittel enthalten. Es ist jedoch bevorzugt, diese auszuschließen.

Die Haltbarkeit des erfindungsgemäßen Erzeugnisses überrascht. Bei der Pasteurisation der Füllung werden vegetative Formen der kontaminierenden Mikroorganismen durch milde Hitzebehandlung abgetötet. Die Dauerformen der Mikroorganismen, sog. Sporen, überleben hierbei jedoch. Herkömmliche pasteurisierte Erzeugnisse, z.B. Molkereiprodukte, müssen daher unter Kühlung aufbewahrt werden. Im erfindungsgemäßen Erzeugnis wird ein Aussporen jedoch aufgrund der speziellen Milieubedingungen hinsichtlich Wasseraktivität, pH und Redoxpotential verhindert. Gleichzeitig wird aufgrund der ausgewählten Wasseraktivitätswerte der Teighülle und der Füllung eine Migration von Wasser aus der Füllung in die Teighülle, die zu einem Austrocknen der Füllung und zu einem Durchweichen der Teighülle führen würde, verhindert.

Zur näheren Erläuterung der Erfindung dienen die beiliegende Figur und das nachfolgende Beispiel.

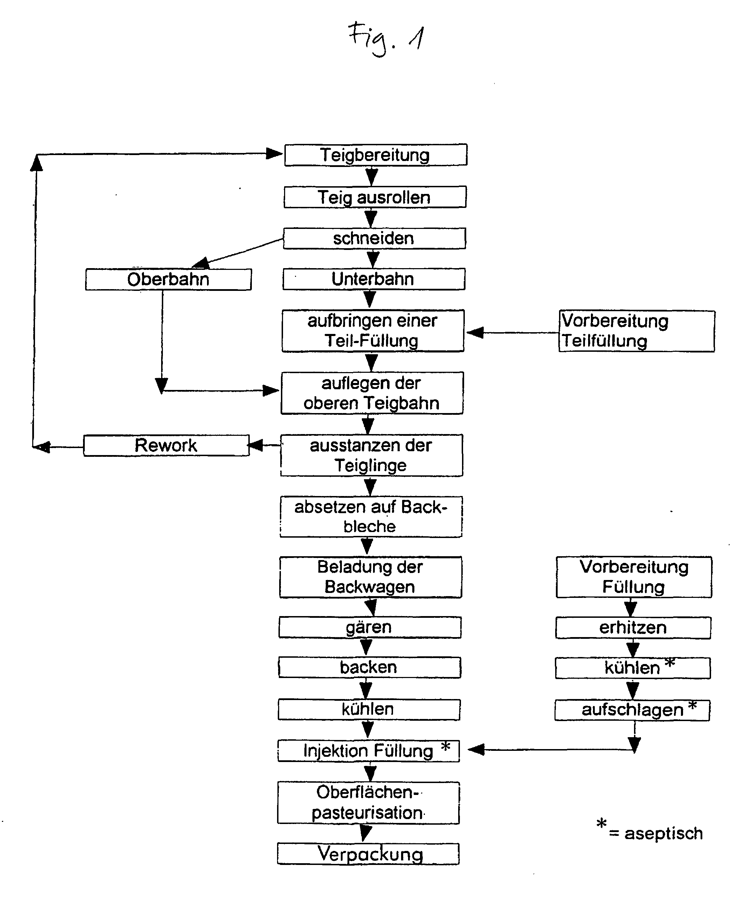

Figur 1 zeigt das Fließdiagramm der Herstellung eines bevorzugten erfindungsgemäßen Erzeugnisses. Bei diesem Verfahren wird zunächst ein Teig bereitet, ausgerollt und in eine Ober- und Unterbahn geschnitten. Auf die Unterbahn werden beabstandet zueinander Portionen einer vorbereiteten Teilfüllung aufgebracht. Anschließend wird die Teigoberbahn aufgelegt und die Teigober- und -unterbahn um die Portionen der Teilfüllung herum aneinandergedrückt. Dann werden Teiglinge ausgestanzt, so daß die Portionen der Teilfüllung jeweils vollständig von einer Teighülle eingeschlossen sind. Die Teiglinge werden auf Backbleche abgesetzt, die Bleche in Backwagen eingesetzt und der Teig gären lassen. Anschließend werden die Teiglinge gebacken und abgekühlt. Getrennt hiervon wird die Füllung vorbereitet. Sie wird zur Pasteurisierung erhitzt, gekühlt und aufgeschlagen. Die Füllung wird dann durch ein Loch in der gebackenen Teighülle in den Hohlraum injiziert, der nach dem Backvorgang aufgrund der Verdunstung von Wasseranteilen der Teilfüllung entstanden ist. Von der Pasteurisierung bis zur Injektion findet die Handhabung der Füllung unter aseptischen Bedingungen statt. Das gefüllte Erzeugnis wird einer Oberflächenpasteurisation unterworfen und anschließend verpackt.

Das folgende Beispiel erläutert die Herstellung von erfindungsgemäßen gefüllten Teigtaschen, die ohne Kühlung lange haltbar sind.

Es wird ein Teig aus folgenden Zutaten hergestellt:

| | |
|---|---|
| Weizenmehl | 590 g |
| Wasser | 280 g |
| Margarine | 150 g |
| Salz | 9 g |
| Hefe | 30 g |
| Backmittel | 95 g |

Die Zutaten werden hierfür in einen Diosna-Kneter zunächst mit der Stufe I vorgemischt und dann auf Stufe II zu einem homogenen Teig vermengt. Der Teig wird dann 10 min einer Tischgare ausgesetzt und anschließend zu einer Teigbahn mit einer Stärke von 2 mm ausgerollt. Die Teigbahn wird in eine Ober- und Unterbahn aufgeteilt. Auf die Unterbahn wird zum besseren Verkleben der beiden Teigbahnen Gluten aufgestreut. Weiterhin wird auf die untere Teigbahn eine Lebensmittelzutat plaziert, welche beim späteren Backen einen definierten Hohlraum hervorruft. Nun wird die obere und untere Teigbahn zusammengeführt und mittels eines speziellen Stanzwerkzeuges miteinander verbunden. Die Teiglinge werden auf Backbleche abgesetzt und anschließend einer Stückgare von 25 min bei 30°C und einer relativen Luftfeuchtigkeit von 80-90% unterzogen. Danach werden die Produkte 13 min bei 210°C gebacken und auf Raumtemperatur abgekühlt.

Parallel dazu wird eine Füllung vorbereitet. Hierzu werden die benötigten Ingredienzien in einen beheizbaren Mischer gegeben und unter ständigem Rühren auf 95 °C erhitzt. Die so vorbehandelten Füllungen können mittels einer Belüftungsmaschine gelockert werden. Dabei kann ein Aufschlag von 0 bis 50% eingestellt werden. Hiernach werden die Produkte reinfektionsfrei eingefüllt. Folgende Füllungen wurden erfolgreich eingesetzt:

| Käsefüllung | |
|---|---|
| Schmelzkäse | 300 g |
| Pflanzenfett | 60 g |
| Aromen, Gewürze | 23 g |
| Salz | 4 g |
| Emulgator | 13 g |
| modifizierte Stärke | 28 g |
| Milcheiweiß | 21 g |
| Gelantine | 12 g |
| Zuckerstoffe | 30 g |

| Leberwurstartige Füllung | |
|---|---|
| Leber | 200 g |
| gekochte Bäuche | 200 g |
| Pflanzenölemulsion | 360 g |
| Salz | 15 g |
| Gewürze | 13 g |
| Modifizierte Stärke | 50 g |
| Zuckerstoffe | 50 g |
| Citronensäure | 2 g |

| Fischartige Füllung | |
|---|---|
| Surimi | 150 g |
| Fett | 20 g |
| Aromen, Gewürze | 3 g |
| Salz | 3 g |
| Modifizierte Stärke | 15 g |
| Zuckerstoffe | 20 g |
| Citronensäure | 1 g |

| Gemüsehaltige Füllung | |
|---|---|
| Gemüsestücke, -püree | 150 g |
| Schmelzkäse | 50 g |
| Pflanzenfett | 120 g |
| Modifizierte Stärke | 30 g |
| Salz | 5 g |
| Aromen, Gewürze | 20 g |
| Emulgator | 10 g |
| Milcheiweiß | 25 g |
| Zuckerstoffe | 20 g |
| Yoghurtpulver | 50 g |

Nach dem Füllen werden die Produkte unter aseptischen Bedinungen und unter weitestgehendem Ausschluß von Luftsauerstoff unter Schutzgas in hochgasdichte Folien verpackt und bei Raumtemperatur gelagert.

## Patentansprüche

1. Verfahren zur Herstellung eines haltbaren gefüllten Backwarenerzeugnisses, umfassend die Schritte:
(a) Herstellen einer im wesentlichen brotartigen Teighülle unter Auswählen der Zusammensetzung des Teigs, der Verarbeitungs- und Backbedingungen, daß die gebackene Teighülle einen Wasseraktivitätswert im Bereich von 0,60 bis 0,95 aufweist,
(b) nach dem Fertigbacken der Teighülle Einbringen einer Füllung in pasteurisierter Form mit einem Wasseraktivitätswert von 0,20 bis 0,99 und einem pH-Wert von 3,5 bis 7,
(c) feuchtigkeitsdichtes Verpacken durch vollständiges Umhüllen des Backwarenerzeugnisses, wobei im zwischen Backwarenerzeugnis und Verpackung verbleibenden Gasraum ein Sauerstoffgehalt von kleiner 1 % eingestellt wird und
(d) die Keimzahl im Gesamtprodukt zum Zeitpunkt des Verpackens kleiner 150/g ist, mit der Maßgabe,
- daß nach Einbringen der Füllung gemäß Schritt (b) ein zweiter Erwärmungsschritt ausgeschlossen wird und
- daß die gebackene Teighülle im Falle einer käsehaltigen Füllung einen Wasseraktivitätswert aufweist, der im oben genannten Bereich, aber unterhalb oder oberhalb von 0,93 liegt.

2. Verfahren nach Anspruch 1, **dadurch gekennzeichnet, daß** der Wasseraktivitätswert der gebackenen Teighülle im Bereich von 0,85 bis 0,95 liegt.

3. Verfahren nach Anspruch 1 oder 2, **dadurch gekennzeichnet, daß** der Wasseraktivitätswert der Füllung im Bereich von 0,80 bis 0,99 liegt.

4. Verfahren nach einem der Ansprüche 1 bis 3, **dadurch gekennzeichnet, daß** der pH-Wert der Füllung 4,2 bis 5,5 beträgt.

5. Verfahren nach einem der Ansprüche 1 bis 4, **dadurch gekennzeichnet, daß** die Keimzahl im Gesamtprodukt zum Zeitpunkt des Verpackens kleiner 100/g liegt.

6. Verfahren nach einem der vorstehenden Ansprüche, **dadurch gekennzeichnet, daß** die Füllung eine emulsionsartige und/oder geschäumte Komponente enthält.

7. Verfahren nach einem der vorstehenden Ansprüche, **dadurch gekennzeichnet, daß** die Füllung eine Gemüsezubereitung, eine Fleischzubereitung oder eine Fischzubereitung darstellt.

8. Haltbares gefülltes Backwarenerzeugnis, umfassend
(a) eine gebackene Teighülle mit einem Wasseraktivitätswert im Bereich von 0,60 bis 0,95,
(b) eine Füllung, die nach dem Fertigbacken der Teighülle in pasteurisierter Form eingebracht worden ist, mit einem Wasseraktivitätswert von 0,20 bis 0,99 und einem pH-Wert von 3,5 bis 7,
(c) eine feuchtigkeitsdichte Verpackung, die das Backwarenerzeugnis vollständig umhüllt, wobei im zwischen Backwarenerzeugnis und Verpackung verbleibenden Gasraum ein Sauerstoffgehalt von kleiner 1 % herrscht und
(d) die Keimzahl im Gesamtprodukt zum Zeitpunkt des Verpackens kleiner 150/g ist, mit der Maßgabe,
- daß nach Einbringen der Füllung gemäß Schritt (b) ein zweiter Erwärmungsschritt ausgeschlossen ist und
- daß die gebackene Teighülle im Falle einer käsehaltigen Füllung einen Wasseraktivitätswert aufweist, der im oben genannten Bereich, aber unterhalb oder oberhalb von 0,93 liegt.

9. Haltbares gefülltes Backwarenerzeugnis nach Anspruch 8, wobei das Erzeugnis zusätzlich eine vor dem Backen der Teighülle eingebrachte backstabile Füllung umfaßt.

10. Haltbares gefülltes Backwarenerzeugnis nach Anspruch 8 oder 9, wobei die Füllung, die nach dem Fertigbacken der Teighülle in pasteurisierter Form eingebracht worden ist, eine nicht-backstabile Füllung ist.

11. Backwarenerzeugnis nach einem der Anspruch 8 bis 10, **dadurch gekennzeichnet, daß** der Wasseraktivitätswert der gebackenen Teighülle im Bereich von 0,85 bis 0,95 liegt.

12. Backwarenerzeugnis nach einem der Ansprüche 8 bis 11, **dadurch gekennzeichnet, daß** der Wasseraktivitätswert der Füllung im Bereich von 0,80 bis 0,99 liegt.

13. Backwarenerzeugnis nach einem der Ansprüche 8 bis 12, **dadurch gekennzeichnet, daß** der pH-Wert der Füllung 4,2 bis 5,5 ist.

14. Backwarenerzeugnis nach einem der Ansprüche 8 bis 13, **dadurch gekennzeichnet, daß** die Keimzahl im Gesamtprodukt zum Zeitpunkt des Verpackens kleiner 100/g ist.

15. Backwarenerzeugnis nach einem der Ansprüche 8 bis 14, **dadurch gekennzeichnet, daß** die Füllung eine emulsionsartige und/oder geschäumte Komponente enthält.

16. Backwarenerzeugnis nach einem der Ansprüche 8 bis 15, **dadurch gekennzeichnet, daß** die Füllung eine Gemüsezubereitung, eine Fleischzubereitung oder eine Fischzubereitung ist.

## Claims

1. Process for producing a long-life filled bakery product comprising the steps:
(a) producing an essentially bread-like dough casing, selecting the composition of the dough, the processing and baking conditions in such a manner that the baked dough casing has a water activity in the range from 0.60 to 0.95,
(b) after completion of baking of the dough casing, introducing a filling in pasteurized form having a water activity of 0.20 to 0.99 and a pH of 3.5 to 7,
(c) moisture-tight packaging by complete encasing of the bakery product, with an oxygen content less than 1% being set in the gas space remaining between bakery product and packaging and
(d) the microbial count in the total product at the time of packaging being less than 150/g,
with the proviso
- that after introducing the filling according to step (b) a second heating step is excluded and
- that the baked dough casing, in the case of a cheese-containing filling, has a water activity which is in the abovementioned range but which is less than or greater than 0.93.

2. Process according to Claim 1, **characterized in that** the water activity of the baked dough casing is in the range from 0.85 to 0.95.

3. Process according to Claim 1 or 2, **characterized in that** the water activity of the filling is in the range from 0.80 to 0.99.

4. Process according to one of Claims 1 to 3, **characterized in that** the pH of the filling is 4.2 to 5.5.

5. Process according to one of Claims 1 to 4, **characterized in that** the microbial count in the overall product at the time of packaging is less than 100/g.

6. Process according to one of the preceding claims, **characterized in that** the filling comprises an emulsion-like and/or foamed component.

7. Process according to one of the preceding claims, **characterized in that** the filling is a vegetable preparation, a meat preparation or a fish preparation.

8. Long-life filled bakery product comprising
(a) a baked dough casing having a water activity in the range from 0.60 to 0.95,
(b) a filling which, after completion of baking of the dough casing, has been introduced in pasteurized form, having a water activity of 0.20 to 0.99 and a pH of 3.5 to 7,
(c) a moisture-tight packaging which completely encloses the bakery product, an oxygen content of less than 1% prevailing in the gas space remaining between bakery product and packaging and
(d) the microbial count in the overall product at the time of packaging being less than 150/g,
with the proviso
- that after introducing the filling according to step (b) a second heating step is excluded and
- that the baked dough casing, in the case of a cheese-containing filling, has a water activity which is in the abovementioned range but is less than or greater than 0.93.

9. Long-life filled bakery product according to Claim 8, in which the product additionally comprises a baking-stable filling introduced before the dough casing is baked.

10. Long-life filled bakery product according to Claim 8 or 9, in which the filling which has been introduced after completion of baking of the dough casing in pasteurized form is not a baking-stable filling.

11. Bakery product according to one of Claims 8 to 10, **characterized in that** the water activity of the baked dough casing is in the range from 0.85 to 0.95.

12. Bakery product according to one of Claims 8 to 11, **characterized in that** the water activity of the filling is in the range from 0.80 to 0.99.

13. Bakery product according to one of Claims 8 to 12, **characterized in that** the pH of the filling is 4.2 to 5.5.

14. Bakery product according to one of Claims 8 to 13, **characterized in that** the microbial count in the overall product at the time of packaging is less than 100/g.

15. Bakery product according to one of Claims 8 to 14, **characterized in that** the filling comprises an emulsion-like and/or foamed component.

16. Bakery product according to one of Claims 8 to 15, **characterized in that** the filling is a vegetable preparation, a meat preparation, or a fish preparation.

## Revendications

1. Procédé de production d'un produit de boulangerie garni de longue conservation comprenant les étapes consistant à;
(a) produire une coque de pâte essentiellement semblable à du pain, en sélectionnant la composition de la pâte, le procédé et les conditions de cuisson d'une manière telle que la coque de pâte cuite ait une activité de l'eau comprise dans la gamme allant de 0,60 à 0,95,
(b) une fois terminée la cuisson de la coque de pâte, introduire une garniture sous une forme pasteurisée ayant une activité de l'eau de 0,20 à 0,99 et un pH de 3,5 à 7,
(c) conditionner dans un emballage étanche à l'humidité en enveloppant complètement le produit de boulangerie, avec une teneur en oxygène inférieure à 1 % dans l'espace de gaz restant entre le produit de boulangerie et l'emballage, et
(d) le décompte microbien dans le produit total au moment de l'emballage étant inférieur à 150/g
à la condition que :
- après introduction de la garniture dans le cadre de l'étape (b), une seconde étape de chauffage soit exclue, et
- la coque de pâte cuite, dans le cas d'une garniture contenant du fromage, ait une activité de l'eau qui soit comprise dans la gamme mentionnée ci-dessus mais qui soit inférieure ou supérieure à 0,93.

2. Procédé selon la Revendication 1, **caractérisé en ce que** l'activité de l'eau de la coque en pâte cuite soit comprise dans la gamme allant de 0,85 à 0,95.

3. Procédé selon la Revendication 1 ou 2, **caractérisée en ce que** l'activité de l'eau de la garniture est comprise dans la gamme allant de 0,80 à 0,99.

4. Procédé selon l'une des Revendications I à 3, caractérisé cn ce que le pH de la garniture est de 4,2 à 5,5.

5. Procédé selon l'une des Revendications 1 à 4, **caractérisé en ce que** le décompte microbien dans le produit dans son ensemble au moment de l'emballage est inférieur à 100/g.

6. Procédé selon l'une des Revendications précédentes, **caractérisé en ce que** la garniture comprend un composant semblable à une émulsion et/ou expansé.

7. Procédé selon l'une des Revendications précédentes, **caractérisé en ce que** la garniture est une préparation de légumes, une préparation de viande ou une préparation de poisson.

8. Produit de boulangerie garni ayant une longue conservation comprenant:
(a) une coque de pâte cuite ayant une activité de l'eau comprise dans la gamme allant de 0,60 à 0,95,
(b) une garniture qui, une fois terminée la cuisson de la coque de pâte, a été introduite sous une forme pasteurisée, ayant une activité de l'eau de 0,20 à 0,99 et un pH de 3,5 à 7,
(c) un emballage étanche à l'humidité qui enveloppe complètement le produit de boulangerie, la teneur en oxygène qui prévaut dans l'espace de gaz restant entre le produit de boulangerie et l'emballage étant inférieure à 1 %, et
(d) le décompte microbien dans le produit dans son ensemble étant inférieur à 150/g,
à la condition que :
- après avoir introduit la garniture dans le cadre e l'étape (b), une seconde étape de chauffage est exclue, et
- la coque de pâte cuite, dans le cas d'une garniture à base de fromage, a une activité de l'eau qui est comprise dans la gamme ci-dessus mais qui est inférieure ou supérieure à 0,93.

9. Produit de boulangerie longue conservation selon la Revendication 8, dans lequel le produit comprend de façon additionnelle une garniture stable à la cuisson qui est introduite avant que la coque de pâte ne soit cuite.

10. Produit de boulangerie longue conservation selon la Revendication 8 ou 9, dans lequel la garniture qui a été introduite après la fin de la cuisson de la coque de pâte sous une forme pasteurisée, n'est pas une garniture stable à la cuisson.

11. Produit de boulangerie selon l'une des Revendications 8 à 10, **caractérisé en ce que** l'activité de l'eau de la coque de pâte cuite est comprise dans la gamme allant de 0,85 à 0,95.

12. Produit de boulangerie selon l'une des Revendications 8 à 11, **caractérisé en ce que** l'activité de l'eau de la garniture est dans la gamme allant de 0,80 à 0,99.

13. Produit de boulangerie selon l'une des Revendications 8 à 12, **caractérisé en ce que** le pH de la garniture est de 4,2 à 5,5.

14. Produit de boulangerie selon l'une des revendications 8 à 13, **caractérisé en ce que** le décompte microbien dans le produit dans son ensemble au moment de l'emballage est inférieur à 100/g.

15. Produit de boulangerie selon l'une des Revendications 8 à 14, **caractérisé en ce que** la garniture comprend un composant semblablc à une émulsion et/ou un composant expansé.

16. Produit de boulangerie selon l'une des revendications 8 à 15, **caractérisé en ce que** la garniture est une préparation de légumes, une préparation de viande ou une préparation de poisson.
